Europäisches Patentamt

European Patent Office

Office européen des brevets

(11) Veröffentlichungsnummer: **0 473 815 A1**

# EUROPÄISCHE PATENTANMELDUNG

(21) Anmeldenummer: **90116903.7**

(22) Anmeldetag: **03.09.90**

(51) Int. Cl.5: **G01T 1/29**, H05G 1/26

(43) Veröffentlichungstag der Anmeldung:
**11.03.92 Patentblatt 92/11**

(84) Benannte Vertragsstaaten:
**DE FR**

(71) Anmelder: **SIEMENS AKTIENGESELLSCHAFT**
**Wittelsbacherplatz 2**
**W-8000 München 2(DE)**

(72) Erfinder: **von Seggern, Heinz, Dr. Dipl.-Phys.**
**Hallerstrasse 2**
**W-8501 Eckental(DE)**
Erfinder: **Winnacker, Albrecht, Prof. Dr.**
**Puchtastrasse 6**
**W-8520 Erlangen(DE)**

(54) **Verfahren und Vorrichtung zum Herstellen von Röntgenbildern.**

(57) Es soll ein Durchstrahlungsbild eines Meßobjekts (8) hergestellt werden, das verschiedene Stoffe mit unterschiedlicher chemischer Ordnungszahl enthält. Die das Meßobjekt (8) durchdringende Röntgenstrahlung wird von einer Speicherplatte (10) aufgenommen, deren photostimulierte Lumineszenz von wenigstens einer Auslesestrahlung (14, 15) ausgelöst und von wenigstens einem Detektor (16, 17) erfaßt wird. Gemäß der Erfindung wird die Verteilung der mittleren chemischen Ordnungszahl $\bar{Z}$ aus dem Verhältnis der photostimulierten Lumineszenz von wenigstens zwei Speicherleuchtstoffen A und B mit unterschiedlichen Absorptionskennlinien abgeleitet. Das Durchstrahlungsbild kann auf einem Bildschirm (14) zweckmäßig farbig dargestellt werden.

FIG 1

Die Erfindung bezieht sich auf ein Verfahren zum Herstellen von Röntgenbildern durch Computer-Radiographie, bei dem das Durchstrahlungsbild eines Meßobjekts, das verschiedene Stoffe mit unterschiedlicher chemischer Ordnungszahl enthält, von einer Speicherplatte aufgenommen wird. Die photostimulierte Lumineszenz der Speicherplatte wird von wenigstens einer Auslesestrahlung ausgelöst und wenigstens zwei Detektoren zugeführt.

Bei der digitalen Computer-Radiographie wird bekanntlich das Bild einer Röntgendurchstrahlung auf einer sogenannten Speicherplatte gespeichert und später von einem Bildleser in digitale elektrische Signale umgewandelt und auf einem Bildschirm sichtbar gemacht. In der Speicherplatte werden die Röntgenstrahlen umgewandelt in elektrische Ladungen. Zu diesem Zweck enthält sie einen Speicherleuchtstoff, der in einem organischen Binder eingegossen und auf einen durchsichtigen Träger, im allgemeinen eine Folie, aufgebracht ist.

In einer Ausleseeinrichtung wird das flächenhafte Muster verschiedener Röntgenintensitäten umgewandelt in eine Folge von elektrischen Signalen, die über einen Analog-Digital-Wandler einem Bildaufbaurechner zugeführt werden. Als Auslesestrahlung ist im allgemeinen das rote Licht eines Lasers, beispielsweise eines Helium-Neon-Lasers mit einer Wellenlänge von 633 nm, vorgesehen, das in den einzelnen Bildpunkten des Speicherleuchtstoffs eine photostimulierte Lumineszenz auslöst. Als Speicherleuchtstoff dient im allgemeinen ein sogenannter Leuchtphosphor, beispielsweise europiumaktivierte Barium-Fluorid-Verbindungen BaFBr:Eu mit einer Emissionswellenlänge von etwa 360 bis 420 nm, die noch geeignete Zusätze enthalten können (E-OS 0 007 105).

In der Röntgenbildtechnik stellt sich häufig das Problem, verschiedene Materialklassen oder Materialgruppen voneinander zu unterscheiden. Beispielsweise sollen bei der Durchleuchtung von Gepäckstücken auf Flughäfen metallische von nichtmetallischen Gegenständen unterschieden werden. Es sollte beispielsweise möglich sein zu beurteilen, ob eine beobachtete Röntgenabsorption im wesentlichen von einem metallischen Gehäuse eines Haarföns oder von einem darin verborgenen Plastiksprengstoff herrührt. Ferner sollen beispielsweise Schichtungen von Materialien erkennbar sein. Vom physikalischen Standpunkt aus gleichgelagerte Fälle treten auch in der medizinischen Röntgendiagnostik auf, etwa wenn es zu beurteilen gilt, ob sich eine auf dem Röntgenbild sichtbare Struktur im Körpergewebe oder in dem davor oder dahintergelegenen Knochenmaterial befindet.

Der Erfindung liegt somit die Aufgabe zugrunde, Materialien, die auf einem durch Computer-Radiographie hergestellten Röntgenbild den Röntgenkontrast hervorrufen, zu klassifizieren.

In einer bekannten Anordnung zum Herstellen von Röntgenbildern aus der Verteilung der mittleren Ordnungszahl $\overline{Z}$ wird das Meßobjekt mit einer Röntgenstrahlung mit breitem Energiespektrum durchleuchtet und die Strahlung wird registriert mit zwei Detektorzeilen unterschiedlicher Energieabhängigkeit. Es können beispielsweise eine dünne und eine dicke Leuchtstoffschicht, die hintereinander angeordnet sind, getrennt beobachtet werden. Die verschiedenen Stoffe des Meßobjekts härten die breitbandige Röntgenstrahlung in unterschiedlicher Weise. Auf diese Härtung reagieren die beiden Detektorzeilen unterschiedlich wegen ihrer unterschiedlichen Energieabhängigkeit. Aus einem Vergleich der mit den beiden Detektorzeilen registrierten Bilder erhält man die Zusammensetzung des durchstrahlten Materials.

Die Erfindung führt zu einem anderen Lösungsweg und besteht in den kennzeichnenden Merkmalen des Anspruchs 1. Auf Anordnungen zur Durchführung des Verfahrens sind die Unteransprüche gerichtet.

Die Speicherplatte enthält eine Mischung oder Schichten von Speicherleuchtstoffen mit unterschiedlicher Röntgenabsorptionskennlinie, beispielsweise Bariumfluorbromid aktiviert mit Europium BaFBr:Eu oder Strontiumsulfid aktiviert mit Europium und Samarium SrS:Eu,Sm sowie Rubidiumbromid aktiviert mit Thallium RbBr:T1. Diese Röntgenspeicherleuchtstoffe unterscheiden sich in wenigstens einer der folgenden Eigenschaften:

1. Im Absorptionsvermögen für Röntgenstrahlung, insbesondere in der Abhängigkeit ihres Absorptionsvermögens von der Energie der Röntgenstrahlung;

2. im Stimulationsspektrum der Auslesestrahlung;

3. im Emissionsspektrum, d.h. in der Wellenlänge der photostimulierten Fluoreszenz, die durch die Auslesestrahlung ausgelöst wird.

Bei diesem Verfahren zum Herstellen von Röntgenbildern durch Computer-Radiographie werden verschiedene Materialklassen dadurch unterschieden, daß als Röntgenfilm eine Speicherfolie eingesetzt wird, die ein Gemisch aus Speicherleuchtstoffen mit den genannten Eigenschaften enthält. Die in den einzelnen Speicherleuchtstoffen, aus denen sich die Folie zusammensetzt, bei einer Röntgenaufnahme erzeugten latenten Bilder werden anschließend getrennt ausgelesen. Aus dem Vergleich der Helligkeiten, mit denen sich die durchleuchteten Gegenstände auf den in den verschiedenen Leuchtstoffen gespeicherten Bildern darstellen, kann auf die Zugehörigkeit der Gegenstände zu bestimmten Materialklassen geschlossen werden. Diese Materialien können somit nach ihrer

mittleren chemischen Ordnungszahl $\bar{Z}$ in Gruppen klassifiziert werden.

Zur Auswertung kann zunächst die Helligkeit $H_A$ des Meßobjekts im Bild von einem Speicherleuchtstoff A ermittelt werden. Dann wird die Helligkeit $H_B$ des Meßobjekts im Bild von einem Speicherleuchtstoff B bestimmt und das Verhältnis Q = $H_B/H_A$ der Helligkeiten des Meßobjekts in beiden Bildern ermittelt. Durch Vergleich der beiden Werte $H_A$ und Q erhält man die Materialklasse des durchstrahlten Meßobjekts, d.h. seine mittlere chemische Ordnungszahl $\bar{Z}$.

Die in den verschiedenen Speicherleuchtstoffen, aus denen die Speicherplatte zusammengesetzt ist, gespeicherten Bilder können beispielsweise aufgrund der unterschiedlichen Stimulationsspektren der stimulierten Lumineszenz der beiden Leuchtstoffe getrennt ausgelesen werden. Bei unterschiedlichen Stimulationsspektren kann zunächst das im Speicherleuchtstoff A gespeicherte Bild mit einer Auslesestrahlung der Wellenlänge $L_A$ abgerastert werden und anschließend wird das im Speicherleuchtstoff B gespeicherte Bild mit einer Auslesestrahlung der Wellenlänge $L_B$ abgerastert. Falls die Stimulationsspektren der beiden Leuchtstoffe sich ganz oder teilweise überlappen, können sie durch die gleiche Auslesestrahlung ausgelesen werden, müssen sich jedoch in diesem Fall im Emissionsspektrum spektral trennen lassen. Die Bilder lassen sich dann getrennt registrieren durch zwei Photodetektoren, von denen einer auf die Emissionswellenlänge $E_A$ des Leuchtstoffes A und von denen der andere auf die Emissionswellenlänge $E_B$ des Leuchtstoffes B empfindlich ist, beispielsweise durch Verwendung entsprechender optischer Filter im Strahlengang. Haben die beiden Speicherleuchtstoffe verschiedene mittlere chemische Ordnungszahlen, so hängt ihr Absorptionsvermögen für Röntgenstrahlung in unterschiedlicher Weise von ihrer Energie ab, da für den Massenabsorptionskoeffizienten $\mu/\rho$ von Röntgenstrahlung gilt:

$$\mu/\rho \sim \lambda^3 \, \bar{Z}^{\,3}.$$

Darin ist $\lambda$ die Wellenlänge der Röntgenstrahlung und $\bar{Z}$ die mittlere chemische Ordnungszahl des absorbierenden Materials des Meßobjekts. Wird nun ein Meßobjekt von Röntgenstrahlung mit einem breiten Energiespektrum durchleuchtet, so wird diese Röntgenstrahlung gehärtet, d.h. ihr Mittelwert verschiebt sich zu kürzerer Wellenlänge. Das Ausmaß der Härtung hängt ab von der mittleren chemischen Ordnungszahl $\bar{Z}$ des durchleuchteten Materials im Meßobjekt. Je höher die mittlere chemische Ordnungszahl $\bar{Z}$ ist, desto größer ist die Härtung. Auf diese Härtung reagieren die beiden Leuchtstoffe aufgrund ihrer verschiedenen Energieabhängigkeit unterschiedlich. Das Verhältnis der Helligkeiten, mit der sich das durchleuchtete Meßobjekt auf den beiden Bildern im Leuchtstoff A und B darstellt, ist abhängig von der mittleren chemischen Ordnungszahl $\bar{Z}$ des Meßobjekts. Die mittlere chemische Ordnungszahl kann somit aus dem Vergleich der Helligkeiten ermittelt werden.

Als Komponenten einer Speicherplatte zur Identifizierung von Materialplatten reichen zwei verschiedene Speicherleuchtstoffe aus. Die Verwendung von mehr als zwei Speicherleuchtstoffen kann die Genauigkeit der Klassifizierung erhöhen.

Zur weiteren Erläuterung der Erfindung wird auf die Zeichnung Bezug genommen, in deren Figur 1 ein Ausführungsbeispiel einer Anordnung zur Durchführung des Verfahrens gemäß der Erfindung als Blockschaltbild schematisch veranschaulicht ist. In Figur 2 sind die Absorptionskennlinien für zwei verschiedene Speicherleuchtstoffe schematisch dargestellt. Figur 3 zeigt ein Quantenspektrum der Röntgenstrahlung. In Figur 4 sind die verschiedenen Verhältniszahlen für verschiedene Materialien eines Meßobjekts in einer Tabelle veranschaulicht.

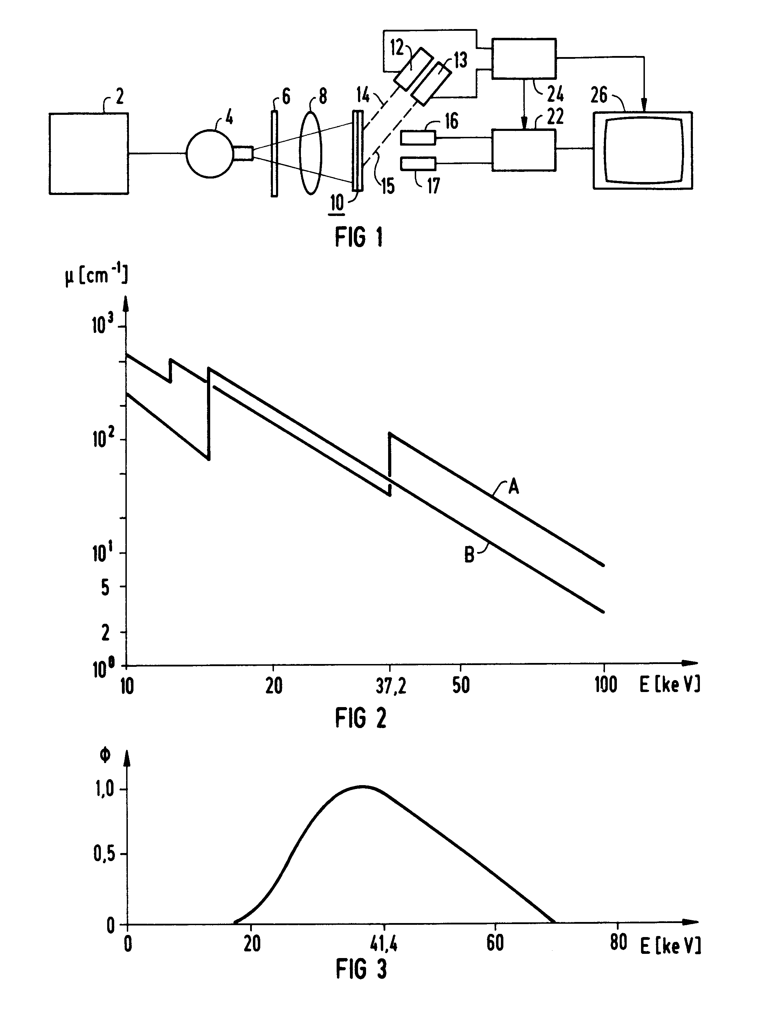

In der Ausführungsform einer Anordnung zur Durchführung des Verfahrens zum Herstellen von Röntgenbildern durch Computer-Radiographie gemäß Figur 1 ist ein Hochspannungsgenerator 2 vorgesehen, der eine Röntgenröhre 4 speist. Die in der Figur nicht näher bezeichneten Röntgenstrahlen durchdringen eine als Filter 6 dienende Metallplatte, die beispielsweise aus Aluminium bestehen kann, sowie ein Meßobjekt 8, das beispielsweise ein Gepäckstück sein kann. Die durch das Meßobjekt 8 entsprechend seiner Absorption geschwächten Röntgenstrahlen treffen auf eine Speicherplatte 10, die gemäß der Erfindung wenigstens zwei Schichten oder auch ein Gemisch von wenigstens zwei Speicherleuchtstoffen, beispielsweise europiumdotiertes Bariumfluorbromid BaFBr:Eu und mit Europium und Samarium dotiertes Strontiumsulfid SrS:Eu,Sm, enthält. Dieses auffallende Strahlenbild erzeugt in dem Speicherleuchtschirm 5 zwei latente Bilder in dem jeweiligen Speicherleuchtstoff, das in Form von in Potentialmulden eingegangenen Elektron-Lock-Paaren vorliegt.

Zur Wiedergabe dieser latenten Bilder wird der Speicherleuchtschirm 10 nacheinander von den Auslesestrahlen 14 und 15 zweier Laserstrahlungsquellen 12 bzw. 13, deren Wellenlängen jeweils im Stimulationsbereich der verwendeten Speicherleuchtstoffe liegen, bildpunktweise abgetastet. Die Auslesestrahlung der Laserstrahlungsquelle 12, beispielweise ein He-Ne-Laser mit einer Wellenlänge von 633 nm für das Bariumfluorbromid BaFBr:Eu, wird von einer in der Figur nicht dargestellten Ablenkrichtung zeilenweise über die Speicherplatte 10 geführt und diese bildpunktweise abgetastet, zugleich wird im allgemeinen die Speicherplatte 10 stufenweise in der Richtung senkrecht zu den Zeilen bewegt. In gleicher Weise wird die Speicherplatte 10 anschließend von einer Laserstrahlungsquelle 13, beispielsweise einem Nd:YAG-Laser, mit einer Wellenlänge von 1064 nm für das Strontiumsulfid SrS:Eu, Sm abgetastet. Durch die Abtastung mit den Auslesestrahlen 14 und 15 werden alle auf dem Speicherleuchtschirm 10 liegenden Bildpunkte zeilenweise nacheinander angeregt und zum Leuchten gebracht. Die beiden Detektoren 16 und 17 erfassen gemäß der Erfindung getrennt die von jeweils einer der beiden Speicherleuchtstoffe ausgelöste photostimulierte Lumineszenz und wandeln die Helligkeit der abgetasteten Bildpunkte in ein elektrisches Signal um, das einer Wiedergabeschaltung 22 zugeführt wird, die aus den einzelnen analogen Ausgangssignalen der Detektoren 16 und 17 ein Videosignal zur Darstellung auf einem Bildschirm 26 erzeugt. Eine Steuereinrichtung 24 erzeugt die Steuertakte für die beiden Laserstrahlungsquellen 12 und 13, die Wiedergabeschaltung 22 und den Bildschirm 26.

Im Diagramm der Figur 2 ist der lineare Schwächungskoeffizient $\mu$ in $cm^{-1}$ über der Energie E der Röntgenstrahlung in keV aufgetragen. Das Diagramm zeigt eine Kennlinie A für europiumdotiertes Bariumfluorbromid BaFBr:Eu sowie eine Kennlinie B für europium- und samariumdotiertes Strontiumsulfid SrS:Eu,Sm. Die Röntgenstrahlung mit wesentlichen Energieanteilen E oberhalb von etwa 37 keV wird in Bariumfluorbromid sehr viel stärker absorbiert als im Strontiumsulfid. Je höher die mittlere Ordnungszahl $\overline{Z}$ des durchstrahlten Meßobjekts 8 und damit die Härtung der verwendeten Röntgenstrahlung ist, desto schwächer wird die Intensität des im Strontiumsulfid gespeicherten Bildes relativ zur Intensität des im Bariumfluorbromid gespeicherten Bildes.

Wird in der Anordnung gemäß Figur 1 als Röntgenstrahlungsquelle eine Röntgenröhre 4 mit einer Wolframanode verwendet, die mit einer Spannung von beispielsweise 70 kV betrieben wird, und im Strahlengang beispielsweise eine 3,6 mm dicke Aluminiumplatte als Filter 3 eingesetzt, so beträgt gemäß Figur 3, in der die Röntgenfluenz in relativen Einheiten über der Energie E in keV aufgetragen ist, die mittlere Energie dieser Strahlung etwa 41,4 keV.

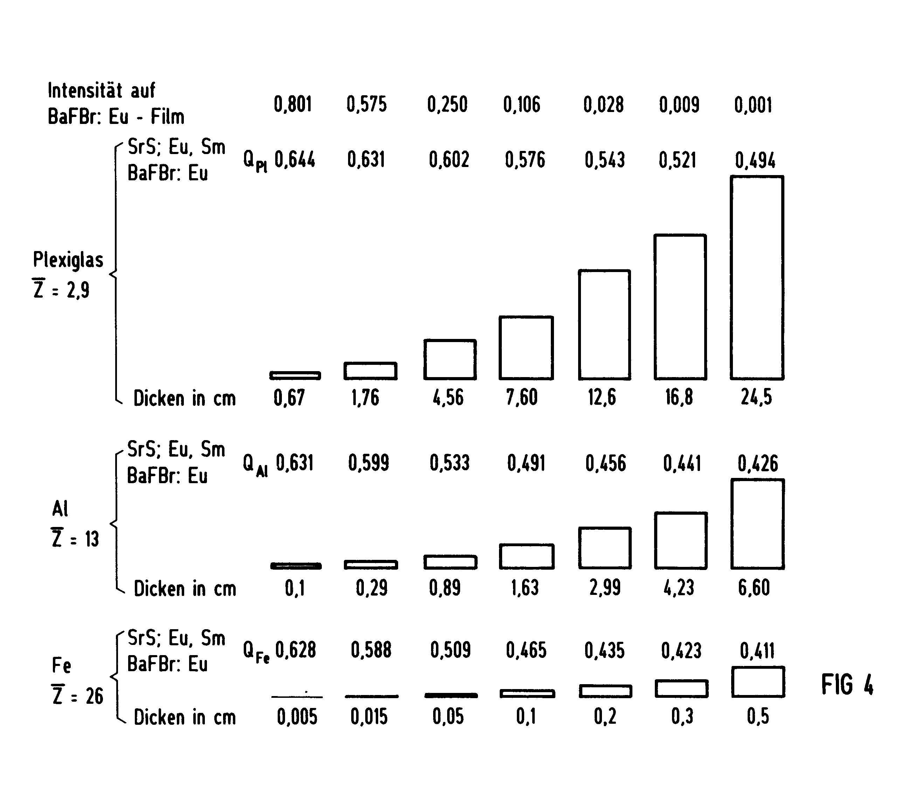

Mit dieser Strahlung werden nun gemäß der Zusammenstellung in Figur 4 unterschiedliche Materialien, nämlich beispielsweise Eisen mit der Ordnungszahl 26, Aluminium mit der Ordnunszahl 13 und Plexiglas mit einer mittleren Ordnungszahl 2,9 in Schichten verschiedener Dicke durchstrahlt und das Energiespektrum der durch die jeweilige Schicht hindurchtretenden Strahlung berechnet. Unter Verwendung des bekannten Energieumwandlungskoeffizienten ergibt sich die in den beiden Speicherleuchtstoffen A und B in Form von Elektron-Lochpaaren absorbierte Energie, die als Maß für die Helligkeit dienen soll, mit der die durchstrahlte Schicht sich in dem betreffenden Speicherleuchtstoff darstellt. Die vom Auslesestrahl emittierte photostimulierte Fluoreszenz ist bekanntlich proportional zur absorbierten Röntgenenergie. Die so definierten und berechneten Helligkeiten wurden in der Weise normiert, daß die Helligkeit der ungeschwächten, durch kein Material beeinflußten Röntgenstrahlung auf der Bariumfluorbromid-Komponente der Speicherplatte 5 gleich 1 gesetzt wurde. Gemäß Figur 4 wurden nun zunächst Plättchen aus Eisen (Z = 26) in sieben verschiedenen Dicken zwischen 0,005 und 0,5 cm durchstrahlt. Diese Plättchen sind in der untersten Zeile der Figur 4 schematisch veranschaulicht. Es wurden dann die Helligkeiten berechnet, mit der sich diese Plättchen auf die Bariumfluorbromid-Komponente der Speicherplatte auswirken. Diese sind in der obersten Zeile der Zusammenstellung wiedergegeben. Das Eisenplättchen mit der Dicke 0,1 cm erscheint auf der Bariumfluorbromid-Komponente der Speicherplatte beispielsweise mit der Helligkeit 0,106.

Anschließend wurden zum Vergleich zwei weitere Materialien, nämlich Aluminium (Z = 13) und Plexiglas (Z = 2,9) durchstrahlt und zwar wiederum sieben Blöcke mit verschiedener Dicke, die in der Tabelle ebenfalls schematisch veranschaulicht sind, und zwar die Blöcke für Aluminium etwa im Maßstab 1:3 und die Blöcke für Plexiglas etwa im Maßstab 1:4. Die Dicken wurden so gewählt, daß jeweils ein Block aus Aluminium und einer aus Plexiglas sich auf der Bariumfluorbromid-Komponente der Speicherplatte in gleicher Helligkeit darstellen, wie eines der Eisenplättchen. Beispielsweise ergeben ein Plättchen mit 0,1 cm dickem Eisen und 1,63 cm dickem Aluminium und 7,6 cm dickem Plexiglas auf der Bariumfluorbromid-Komponente der Speicherplatte 5 die gleiche Helligkeit, nämlich 0,106, wie aus der vierten Spalte zu entnehmen ist. Ein Block mit 7,6 cm dickem Plexiglas und 1,63 cm dickem Aluminium sowie 0,1 cm Eisen wären somit im Röntgenbild an sich nicht zu unterscheiden.

Gemäß der Erfindung wird nun zusätzlich die Helligkeit der Bilder auf der Strontiumsulfid-Komponente der Speicherplatte betrachtet. Diese Helligkeiten werden für die verschiedenen Plättchen bzw. Blöcke berechnet und jeweils das Verhältnis der Helligkeit auf der Strontiumsulfid-Speicherplatte zur Helligkeit auf der Bariumfluorbromid-Speicherplatte gebildet. Die Reihen dieser Verhältniszahlen sind in Figur 4 für Plexiglas mit $Q_{P1}$, für Aluminium mit $Q_{A1}$ und für Eisen mit $Q_{Fe}$ bezeichnet. Aus den Spalten ist zu entnehmen, daß sich die verschiedenen Materialien in diesen Helligkeitsverhältnissen Q voneinander unterscheiden, beispielsweise 0,1 cm Fe, 1,63 cm Al und 7,6 cm Plexiglas haben auf der Bariumfluorbromid-Komponente der Platte alle gleiche Helligkeiten, nämlich 0,106, wie die vierte Spalte zeigt. Um die mittlere chemische Ordnungszahl $\overline{Z}$ zu bestimmen, ist die Helligkeit auf der Strontiumsulfid-Komponenteder Platte zu ermitteln und das Verhältnis Q zu bilden. Ergibt sich beispielsweise gemäß der vierten Spalte Q = 0,465, so handelt es sich bei dem Material um Eisen oder jedenfalls um eine Verbindung mit der mittleren chemischen Ordnungszahl $\overline{Z}$ des Eisens. Erhält man Q = 0,491, so handelt es sich um Aluminium oder ein Material mit der mittleren chemischen Ordnungszahl $\overline{Z}$ des Aluminiums. Falls sich Q = 0,576 ergibt, so handelt es sich um Plexiglas oder jedenfalls um eine Verbindung mit der mittleren Ordnungszahl $\overline{Z}$ des Plexiglases. Auch jedes andere Element mit der Ordnungszahl $\overline{Z}$ oder jede andere Verbindung mit einer mittleren Ordnungszahl $\overline{Z}$ läßt sich anhand des charakteristischen Q-Wertes identifizieren. Eine Mischung von mehr als zwei Speicherleuchtstoffen auf der Speicherplatte 5 kann die Genauigkeit erhöhen.

Im Ausführungsbeispiel gemäß Figur 1 sind zur Auslesung der gespeicherten Information zwei Laserstrahlungsquellen 12 und 13 und zwei getrennte Detektoren 16 und 17 vorgesehen. Es kann jedoch zur Auslesung auch ein gemeinsamer Detektor vorgesehen sein, dessen Empfindlichkeitsbereich die Emissionswellenlängen der beiden Speicherleuchtstoffe erfaßt. Mit Europium dotiertes Bariumfluorbromid emittiert beispielsweise in einem Bereich von etwa 350 bis 440 nm mit einem Strahlungsmaximum bei etwa 390 nm. Der Emissionsbereich von Strontiumsulfid, das mit Cer und Samarium dotiert ist, liegt etwa im Bereich von 380 bis 480 nm mit einem Strahlungsmaximum bei etwa 430 nm.

In einer besonders vorteilhaften weiteren Ausführungsform der Anordnung mit Speicherleuchtstoffen, deren Stimulationsbereiche der Wellenlängen sich überlappen, kann auch eine gemeinsame Laserstrahlungsquelle zur Auslesung vorgesehen sein. In dieser Ausführungsform kann die Speicherplatte 10 beispielsweise thalliumdotiertes Rubidiumbromid RbBr:T1 mit einer Emissionswellenlänge im Bereich von etwa 300 bis 400 nm und einem Strahlungsmaximum bei etwa 370 nm sowie thalliumdotiertes Rubidiumjodid RbJ:T1 mit einer Emissionswellenlänge im Bereich von etwa 400 bis 460 nm und einem Strahlungsmaximum von etwa 430 nm enthalten. Diese Speicherleuchtstoffe können von einer gemeinsamen Laserstrahlungsquelle, beispielsweise von einem GaAlAs-Laser, mit einer Anregungswellenlänge von etwa 750 nm abgetastet werden. Diese Ausführungsform der Anordnung hat den Vorteil, daß die Auslesung bei den genannten Emissionswellenlängen mit zwei Detektoren in einem gemeinsamen Arbeitsgang erfolgen kann. Als Detektoren 16 und 17 können beispielsweise Photomultiplier mit entsprechenden optischen Filtern vorgesehen sein.

**Patentansprüche**

1. Verfahren zum Herstellen von Röntgenbildern durch Computer-Radiographie, bei dem das Durchstrahlungsbild eines Meßobjekts, das verschiedene Stoffe mit unterschiedlicher chemischer Ordnungszahl enthält, von einer Speicherplatte aufgenommen wird, deren photostimulierte Lumineszenz von wenigstens einer Auslesestrahlung ausgelöst und wenigstens einem Detektor zugeführt wird, **dadurch gekennzeichnet,** daß die Verteilung der mittleren chemischen Ordnungszahl $\overline{Z}$ aus dem Verhältnis der Absorptionsanteile von wenigstens zwei Speicherleuchtstoffen mit unterschiedlicher Absorptionskennlinie (A, B) abgeleitet wird (Figur 2).

2. Anordnung zur Durchführung des Verfahrens nach Anspruch 1, **gekennzeichnet** durch folgende Merkmale:
   a) die Speicherplatte (10) enthält wenigstens zwei verschiedene Speicherleuchtstoffe mit unterschiedlicher Absorptionskennlinie (A, B) derart, daß verschiedene Stoffgruppen des Meßobjektes (8) in den beiden Speicherleuchtstoffen Bilder unterschiedlicher Intensität ergeben,
   b) diese Speicherleuchtstoffe unterscheiden sich im Stimulationsspektrum der Auslesestrahlung und/oder dem Emissionsspektrum der photostimulierten Lumineszenz,
   c) zum Erfassen der Emission ist mindestens ein Detektor (16, 17) vorgesehen (Figur 1).

3. Anordnung nach Anspruch 2, **dadurch gekennzeichnet,** daß den verschiedenen Speicherleuchtstoffen der Speicherplatte (10) eine gemeinsame Auslesestrahlung zugeordnet ist.

4. Anordnung nach Anspruch 2, **dadurch gekennzeichnet,** daß den verschiedenen Speicherleuchtstoffen der Speicherplatte (10) jeweils eine getrennte Auslesestrahlung (14, 15) zugeordnet ist.

5. Anordnung nach Anspruch 4, **dadurch gekennzeichnet,** daß zum Erfassen der Emission ein gemeinsamer Detektor vorgesehen ist.

**FIG 1**

**FIG 2**

**FIG 3**

EP 0 473 815 A1

| Intensität auf BaFBr: Eu - Film | 0,801 | 0,575 | 0,250 | 0,106 | 0,028 | 0,009 | 0,001 |
|---|---|---|---|---|---|---|---|

**Plexiglas** $\overline{Z} = 2{,}9$

| SrS; Eu, Sm / BaFBr: Eu | $Q_{Pl}$ 0,644 | 0,631 | 0,602 | 0,576 | 0,543 | 0,521 | 0,494 |
|---|---|---|---|---|---|---|---|
| Dicken in cm | 0,67 | 1,76 | 4,56 | 7,60 | 12,6 | 16,8 | 24,5 |

**Al** $\overline{Z} = 13$

| SrS; Eu, Sm / BaFBr: Eu | $Q_{Al}$ 0,631 | 0,599 | 0,533 | 0,491 | 0,456 | 0,441 | 0,426 |
|---|---|---|---|---|---|---|---|
| Dicken in cm | 0,1 | 0,29 | 0,89 | 1,63 | 2,99 | 4,23 | 6,60 |

**Fe** $\overline{Z} = 26$

| SrS; Eu, Sm / BaFBr: Eu | $Q_{Fe}$ 0,628 | 0,588 | 0,509 | 0,465 | 0,435 | 0,423 | 0,411 |
|---|---|---|---|---|---|---|---|
| Dicken in cm | 0,005 | 0,015 | 0,05 | 0,1 | 0,2 | 0,3 | 0,5 |

FIG 4

**Europäisches Patentamt**

# EUROPÄISCHER RECHERCHENBERICHT

Nummer der Anmeldung

**EP 90 11 6903**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 081 227 ( A. MACOVSKI) <br> * Zusammenfassung; Abbildung 1 * <br> – – – | 1,2 | G 01 T 1/29 <br> H 05 G 1/26 |
| Y | EP-A-0 112 469 (FUJI PHOTO FILM CO., LTD) <br> * Zusammenfassung; Abbildungen 1-4; Ansprüche 1-2 * | 1,2 | |
| A | | 3,5 | |
| | – – – | | |
| A | US-A-4 861 993 (YUUMA ADACHI et al.) <br> * Zusammenfassung; Abbildungen 1-2 * <br> – – – – – | 1,3,5 | |

|  | RECHERCHIERTE SACHGEBIETE (Int. Cl.5) |
|---|---|
| | G 01 T <br> H 05 G |

Der vorliegende Recherchenbericht wurde für alle Patentansprüche erstellt

| Recherchenort | Abschlußdatum der Recherche | Prüfer |
|---|---|---|
| Den Haag | 14 Juni 91 | BAROCCI S. |